# EUROPÄISCHE PATENTSCHRIFT

(11) **EP 2 685 382 B1**
(45) Veröffentlichungstag und Bekanntmachung des Hinweises auf die Patenterteilung: **16.10.2019**
(21) Anmeldenummer: 13166958.2
(22) Anmeldetag: 08.05.2013
(51) Int. Cl.: G06F 11/36

(54) **Verfahren und Vorrichtung zum Erstellen und Testen eines Steuergeräteprogramms**
Method and device for producing and testing a control device program
Procédé et dispositif de création et de test d'un programme d'appareil de commande

(30) Priorität: 10.07.2012 DE 102012211981
(43) Veröffentlichungstag der Anmeldung: 15.01.2014
(73) Patentinhaber: dSPACE digital signal processing and control engineering GmbH, 33102 Paderborn (DE)
(72) Erfinder: Markus, Süvern, 32683 Barntrup (DE); Geburzi, Anne, 33106 Paderborn (DE)

(56) Entgegenhaltungen:
- Thomas Zuawka ET AL: "Testautomatisierung für Steuergeräte-Software mit AUTOSAR Architektur", Fachvorträge der 2. AutoTest 2008, 1. Januar 2008 (2008-01-01), Seiten 1-15, XP055071744, Gefunden im Internet: URL:http://www.fkfs.de/fileadmin/media/04_ unternehmen/veranstaltungen/autotest/pdf_d okumente/paper_2008/paper_11_SYSTECS_Zuraw ka.pdf [gefunden am 2013-07-17] & Nn: "Fachvorträge der 2. AutoTest 2008 Mittwoch, 22.Oktober 2008", , 1. Januar 2008 (2008-01-01), Seiten 1-2, XP055071748, Gefunden im Internet: URL:http://www.fkfs.de/deutsch/unternehmen /veranstaltungen/archiv/veranstaltungen-20 08/autotest-2008/download-der-fachvortraeg e/fachvortraege-mittwoch-22102008/ [gefunden am 2013-07-17]
- Nn: "Messina 2.9 von Berner & Mattner", , 1. Januar 2011 (2011-01-01), Seiten 1-2, XP055071751, Gefunden im Internet: URL:http://www.berner-mattner.com/cms/uplo ad/pdf/presse/BernerMattner_Pressemeldung_ MESSINA_29.pdf [gefunden am 2013-07-17]
- PATRICK E LANIGAN ET AL: "Experiences with a CANoe-based fault injection framework for AUTOSAR", DEPENDABLE SYSTEMS AND NETWORKS (DSN), 2010 IEEE/IFIP INTERNATIONAL CONFERENCE ON, IEEE, PISCATAWAY, NJ, USA, 28. Juni 2010 (2010-06-28), Seiten 569-574, XP031729568, ISBN: 978-1-4244-7500-1
- Johan Haraldsson ET AL: "Software implemented fault injection for AUTOSAR based systems", , 1. Juni 2012 (2012-06-01), Seiten 1-48, XP055071755, Gefunden im Internet: URL:http://publications.lib.chalmers.se/re cords/fulltext/164544.pdf [gefunden am 2013-07-17]
- James Dickie ET AL: "ETAS' AUTOSAR-OS and -RTE Reach Maturity", , 1. Januar 2009 (2009-01-01), Seiten 34-35, XP055071753, Gefunden im Internet: URL:http://www.etas.com/data/RealTimes_200 9/rt_2009_1_34_en.pdf [gefunden am 2013-07-17]

## Beschreibung

Die Erfindung betrifft eine Entwicklungseinrichtung sowie ein Verfahren zum Erstellen und Testen eines Steuergeräteprogramms. Das Steuergeräteprogramm ist dabei zur Steuerung einer elektronischen Steuerungseinheit in einem Fahrzeug ausgebildet. Das entsprechende Verfahren umfasst das Bereitstellen eines Eingriffspunktes zur Manipulation einer Größe einer Laufzeitumgebung für das Testen einer zu testenden Steuergeräte-Programmkomponente in einer Testumgebung mit einer Testszenario-Programmkomponente zur Bereitstellung von Eingangswerten und einer Beobachtervorrichtung zum Empfangen von Ausgangswerten und Anzeigen des Testergebnisses. Dabei werden ein oder mehrere Programmkomponenten verwendet, einschließlich einer zu testenden Steuergeräte-Programmkomponente und einer Testszenario-Programmkomponente, deren Schnittstellen jeweils gemäß dem AUTOSAR-Standard definiert sind. Die Verbindungen zwischen den Ein- und Ausgangswerten aller Programmkomponenten werden definiert und ein ausführbares Programm aller Programmkomponenten wird erstellt. Dabei umfasst das Erstellen ein Generieren einer Laufzeitumgebung, wobei die Laufzeitumgebung einen Kommunikationskanal zur Übertragung von Eingabe- und Ausgabewerten zwischen den Programmkomponenten bereitstellt.

Der Begriff Entwicklungseinrichtung kann im Rahmen der vorliegenden Erfindung verstanden werden als Einrichtung, mittels derer ein Anwender, d.h. beispielsweise ein Benutzer der Entwicklungseinrichtung, ein Steuergeräteprogramm entwickeln, modellieren und erstellen kann. Das erstellte Steuergeräteprogramm kann dann zur Simulation und/oder zum Testen verwendet werden. Der Begriff Steuergeräteprogramm kann im Rahmen der vorliegenden Erfindung verstanden werden als Mess-, Steuer-, Regel- und/oder Kalibrierungsprogramm zur Steuerung einer elektronischen Steuerungseinheit in einem Fahrzeug. Unter dem Begriff Steuergeräteprogramm können sowohl einzelne Programmkomponenten mit unterschiedlichen Funktionen sowie komplexe Programm-Architekturen mit mehreren, miteinander verbundenen Programm-Komponenten fallen. Der Begriff elektronische Steuerungseinheit kann im Rahmen der vorliegenden Erfindung verstanden werden als ein Steuerungssystem, beispielsweise ein Steuergerät in einem Kraftfahrzeug. Die elektronische Steuerungseinheit kann dabei beispielsweise zum Messen, Steuern, Regeln und/oder Kalibrieren von Fahrzeugkomponenten dienen. Der Begriff Fahrzeug wird im Folgenden als umfassende Bezeichnung für Wasserfahrzeuge, Landfahrzeuge, Luftfahrzeuge, Raumfahrzeuge und/oder Kombinationen davon verwendet.

### HINTERGRUND

Entwicklungseinrichtungen sowie Verfahren zum Erstellen und Testen von Steuergeräteprogrammen der eingangs genannten Art sind aus dem Stand der Technik grundsätzlich bekannt. Sie dienen einem Anwender in der Regel als Entwicklungswerkzeug zum Erstellen, Entwickeln, Testen, Simulieren und/oder Kalibrieren von Steuergeräteprogrammen, beispielsweise für ein reales Steuergerät oder aber einer virtuellen elektronischen Steuerungseinheit (V-ECU: Virtual Electronic Control Unit) und/oder einer virtuellen Verarbeitungseinheit (VPU: Virtual Processing Unit).

Eine V-ECU ist ein virtuelles Steuergerät, d.h. ein Steuergeräte-Programm ohne direkten Hardware-Bezug, welches aber sämtliche, spezifische Eigenschaften der Hardware reflektiert. Die V-ECU wird in einen Simulator integriert, um das Verhalten eines realen Steuergerätes zu simulieren. V-ECUs können im Rahmen einer Offline- oder Echtzeitsimulation genutzt werden. V-ECUs nutzen Schnittstellen der Simulator-Backplane, um mit anderen Steuergeräten, Streckenmodellen oder IO-Treibern zu kommunizieren. In der Wahrnehmung des Anwenders steht die V-ECU oft stellvertretend für seine gesamte ECU, inkl. aller Treibermodule. Im technischen Sinne umfasst die V-ECU aber nur den Teil der Programme oberhalb der Backplane-Schnittstelle, da die tieferliegenden Programmschichten durch Backplane-Module des konkreten Simulators ersetzt werden. Zur Laufzeit wird die V-ECU mit Hilfe eines VPU-Integration-Codes in einen Rahmen (VPU) eingebettet, um daraus einen ausführbaren Simulator-Prozess zu machen. Im Rahmen dieser Anmeldung ist ein solcher ausführbarer Simulator-Prozess als ausführbares Programm beschrieben. Dieses ausführbare Programm kann sich aus einer oder mehreren Steuergeräte-Programmkomponenten und oder Testszenario-Programmkomponenten zusammensetzen. Die Programmkomponenten ihrerseits können eine oder auch mehrere unterschiedliche Funktionen erfüllen. Unabhängig von der Anzahl der eingebundenen Programmkomponenten wird eine einzige Laufzeitumgebung erzeugt. Dies erlaubt das Testen von Geräteprogrammkomponenten in einer Bestehenden Programmarchitektur. Die gegebene Architektur muss dazu nur um Testkomponenten erweitert und die Laufzeitumgebung konfiguriert und neu generiert werden
Eine VPU ist eine virtuelle Ausführungseinheit innerhalb des Simulators, auf der eine zu simulierende Anwendung ausgeführt wird. Eine VPU besitzt eigene zugeteilte virtuelle Rechenressourcen (Core), virtuellen Speicher (RAM), und virtuelle Timer. Diese Ressourcen sind unabhängig von anderen VPUs, so dass die VPUs quasi-parallel simuliert werden. Ebenso besitzt die VPU einen eigenständigen Satz von OS-Ressourcen (Tasks, Counter, Alarme, Events, Critical Sections, ...). Die Nutzung von IO-Treibern und die Kommunikation mit anderen VPUs geschieht über Dienste der Backplane. In einem Echtzeitsystem werden VPUs meist auf einem eigenen physikalischen Core ausgeführt. In einer Offline Simulation geschieht die Zuteilung der VPUs auf Cores dynamisch durch das zugrundeliegende Betriebssystem des Simulation Environments (z. B. Windows).

Eine beispielhafte Entwicklungseinrichtung der eingangs genannten Art ist der Produktbeschreibung zu SystemDesk 3.1 zu entnehmen: (http://www.dspace.de/de/gmb/home/products/sw/system_architecture_software/systemd esk.cfm). SystemDesk ist ein Werkzeug zur Unterstützung der Entwicklung von verteilten elektronischen Systemen. SystemDesk ist insbesondere dazu ausgebildet, Steuergeräteprogramme zu erstellen, welche im Rahmen des sogenannten AUTOSAR-Standards (Automotive Open System Architecture) verwendet werden können.

Die bisher bekannten Entwicklungseinrichtungen stellen einem Anwender in der Regel eine Bedienoberfläche für die Entwicklungseinrichtung zur Verfügung, mittels derer ein Modell bzw. eine Architektur des Steuergeräteprogramms graphisch, beispielsweise in Form einer Baumstruktur mit mehreren Programmkomponenten, wiedergegeben wird und bearbeitet werden kann. Eine solche Entwicklungsumgebung wird beispielsweise in "ETAS' AUTOSAR-OS and -RTE Reach Maturity" von James Dickie et al. beschrieben. Mit wachsender Komplexität heutiger Steuergeräteprogramme und deren Modellen bzw. Architekturen wächst auch die Komplexität der zu verwendenden Entwicklungseinrichtungen zum Erstellen derartiger Steuergeräteprogramme. Frühzeitiges Testen einzelner Programmkomponenten ist daher ein essentieller Bestandteil moderner Programmentwicklung im Rahmen komplexer Programmstrukturen geworden, um mögliche Fehlerquellen im späteren Prozessablauf zu einem frühen Zeitpunkt im Entwicklungsprozess identifizieren zu können. In der Publikation von Sandmann, G. and Thompson, R., "Development of AUTOSAR Software Components within Model-Based Design," SAE Technical Paper 2008-01-0383, 2008, wird ein Verfahren zum Model-basierten Design, welches Test- und Validierungsschritte nicht als abschließenden Prozess betrachtet, sondern als kontinuierlich begleitende Aktivität. Neben Testszenarien, wie sie vom Design oder Testingenieur entwickelt werden, stellt das Verfahren auch Mittel zur automatischen Generierung von Testfällen zur Verfügung wie sie z.B. für MC/DC (Modified condition/decision coverage) im D0-178B Standard für Level A Software festgelegt sind.

Neben Applikations-spezifischen Testszenarien müssen die einzelnen Anwendungen jedoch auf ihre korrekte Funktionsweise bezüglich möglicher auftretender Fehler in der Prozesskette zu verarbeitender Daten - wie z.B. Verzögerung oder Ausfall der internen Signalübertragung von einer elektronischen Kontrolleinheit zur anderen - getestet werden. Bisherige Realisierungen von Testumgebungen basierend auf dem AUTOSAR Standard, welche aus einer Anwendungsprogrammkomponente bestehen, die über eine Laufzeitumgebung mit einer Testszenario-Programmkomponente verbunden ist, ermöglichen bereits Verbundtests mehrerer miteinander agierender elektronischer Steuerungseinheiten, die, wie in "Testautomatisierung für Steuergeräte-Programme mit AUTOSAR Architektur" (http://www.fkfs.de/fileadmin/media/04 unternehmen/veranstaltungen/autotest/pdf doku mente/paper 2008/paper 11 SYSTECS Zurawka.pdf) beschrieben, jede für sich als black box betrachtet wird und sämtliche Ein- und Ausgangssignale der Steuerungseinheiten in einem globalen Datenpool für Manipulationen zur Verfügung stehen. Somit ist ein frühzeitiges Testen im Verbund auch bei unterschiedlichem Entwicklungsstand bereits möglich. Die eigentlich automatisch generierte AUTOSAR-Laufzeitumgebung wird durch Mechanismen des Testsystems nachgebildet

Ein weiteres Testsystem wird in der Publikation "Messina 2.9 von Berner & Mattner: Neues Release verbessert AUTOSAR-Unterstützung für modellbasiertes Testen" publiziert Januar 2011 beschrieben. Dabei erstellt das MESSINA-Programm für jede eingebundene Programmkomponente eines Verbundtests eine eigene Test-Laufzeitumgebung auf Basis der AUTOSAR-XML Datei. Die Kommunikation der einzelnen Test-Laufzeitumgebungen wird simuliert, indem ein virtueller Funktionsbus die Kommunikation der Laufzeitumgebungsschnittstellen, wie Sender/Empfänger-Ports oder Client/Server-Ports abbildet. So wird ein Imitieren oder Prüfen von Client/Server-Operationen erlaubt. Die jeweiligen Test-Laufzeitumgebungen dienen also dazu die einzelnen Programmkomponenten mit der Messina-Plattform zu verbinden.

Ein wichtiges Verfahren bei Softwaretests ist die Fehlerinjektion. Der Artikel "Experiences with a CANoe-based fault injection framework for AUTOSAR" von Patrick E. Lanigan et al. beschreibt die Fehlerinjektion in die sogenannte "Com Component" der Basissoftwarekomponenten. Die Fehlerinjektion erfolgt dort mittels sogenannter Hook-Funktionen. Auch in der Masterarbeit von Johan Haraldsson et al. mit dem Titel "Software implemented fault injection for AUTOSAR based systems" werden Methoden der Fehlerinjektion beschrieben. Unter anderem wird auch eine Manipulation der Laufzeitumgebung mittels Hook-Funktionen erwähnt.

### DIE ERFINDUNG IM ÜBERBLICK

Es ist daher Ziel der Erfindung eine verbesserte Entwicklungseinrichtung und ein effizientes Verfahren zum Erstellen und Testen einer Steuergeräte-Programmkomponente bereitzustellen, welche bzw. welches es erlaubt, die Reaktion einer Steuergeräte-Programmkomponente auf Eingriffe in den Kommunikationsprozess zwischen verschiedenen Programmkomponenten gemäß dem AUTOSAR Standard zu testen.

Die Aufgabe wird gelöst durch ein Verfahren der eingangs genannten Art wobei:
ein Komponenten-Test-Dienst bereitgestellt wird, welcher eine Schnittstelle der Laufzeitumgebung gemäß dem AUTOSAR Standard als Eingriffspunkt zur Manipulation einer Größe der Laufzeitumgebung anbietet, und mittels entsprechender Codegenerierung für die Laufzeitumgebung einen Zugriff der Testszenario-Programmkomponente auf die Größe der Laufzeitumgebung gestattet, wobei die Größe einen über den Kommunikationskanal ablaufenden Prozess bestimmt oder beschreibt oder beeinflusst.

Der Erfindung liegt die Erkenntnis zu Grunde, dass mit zunehmender Komplexität heutiger Steuergeräteprogramme ein flexibles Testen der verschiedenen am Verbundtest beteiligten Programmkomponenten in verschiedenen Stadien der Entwicklung von Nöten ist. Dabei müssen neben den Aufgaben, welche von den einzelnen Programmkomponenten erfüllt werden, auch Reaktionen dieser Komponenten auf Fehler, welche bei der Kommunikation der Programmkomponenten untereinander auftreten z.B. fehlerhafte Signalübertragung, getestet werden. Für Testzwecke ist es ebenfalls vorteilhaft, wenn einzelne Programm-interne Größen während eines Testes manipulierbar wären, ohne jedes Mal entweder die Simulation oder die Steuergeräte-Programmkomponente entsprechend konfigurieren zu müssen. Die Kommunikation der am Test beteiligten Programmkomponenten erfolgt über eine gemeinsame Laufzeitumgebung. Nachträgliches Eingreifen in generierte ausführbare Programme, basierend auf den eingebundenen Programmkomponenten und der Laufzeitumgebung zum Testen bestimmter Fehlerzustände oder bestimmter vorbestimmter Ereignisse innerhalb der Kommunikation ist dabei zu vermeiden, da die zu Grunde liegenden Testszenario-Programmkomponenten nicht die benötigte Information erhalten, den Fehlerzustand in einem späteren Stadium, mit neu generiertem ausführbaren Programm, zu reproduzieren. Das Erzeugen jeweils einer eigenen Laufzeitumgebung pro Programmkomponente, um einen Kommunikationsfehler zwischen den Programmkomponenten zu injizieren, verursacht auf der anderen Seite eine unnötige Komplexität der Testumgebung.

Ein wesentlicher Vorteil der Erfindung besteht darin, dass das Verhalten der Laufzeitumgebung von außen im Rahmen eines Komponententests oder auch eines Komponentenverbundtests beeinflussbar ist. Daher können Testszenario-Programmkomponenten vielfach ohne weitere Anpassung wiederverwendet werden.

Ein Komponenten-Test-Dienst der Laufzeitumgebung kann im Rahmen der vorliegenden Erfindung verstanden werden als eine Beschreibung für einen Port und eine Schnittstelle der Laufzeitumgebung gemäß dem AUTOSAR Standard als Eingriffspunkt zur Manipulation einer Größe der Laufzeitumgebung. Diese Beschreibung wird dem Simulator-Prozess bekannt gemacht, z.B. durch Verbinden des Komponenten-Test-Dienstes mit z.B. einer Testszenario-Programmkomponente. Beim automatischen Erstellen des ausführbaren Programmes wird dann gemäß dem definierten Eingriffspunkt die entsprechende Eingriffsschnittstelle für die Laufzeitumgebung erstellt. Eine Schnittstelle der Testszenario-Programmkomponente kann dann erfindungsgemäß mit der Eingriffsschnittstelle der Laufzeitumgebung, d.h. dem Eingriffspunkt, verbunden werden und somit auf die Kommunikation zwischen den Programmkomponenten oder interne Größen der einzelnen Programmkomponenten eingewirkt werden.

Ein weiterer Vorteil der vorliegenden Erfindung ist damit, dass mit der Generierung eines ausführbaren Programmes, welches die Generierung einer Laufzeitumgebung einschließt, neben der üblicherweise erzeugten Programmvariablenbeschreibungen nun auch Laufzeitumgebungsvariablen beschrieben sind, so dass diese mit Hilfe von Experimentier- und Testautomatisierungswerkzeugen direkt einstellbar sind.

Gemäß einer bevorzugten Ausführungsform des erfindungsgemäßen Verfahrens kann das Verfahren weitergehend dahin ausgestaltet werden, dass das Bereitstellen einer Beobachtervorrichtung umfasst: Bereitstellen einer Beobachter-Programmkomponente, deren Schnittstellen jeweils gemäß dem AUTOSAR-Standard definiert sind.

Gemäß einer bevorzugten Ausführungsform des erfindungsgemäßen Verfahrens ist die Größe der Laufzeitumgebung durch einen Parameter, eine Variable oder eine Funktion der Laufzeitumgebung gegeben.

Programmkomponenten, die über eine Laufzeitumgebung miteinander kommunizieren, müssen sogenannte "application program interfaces" API-Funktionen aufrufen, welche Basisfunktionen für Anwendungsprogramme darstellen. So muss jede Testszenario-Programmkomponente zum Übermitteln eines Datenelements über die Laufzeitumgebung einen Laufzeit-Leseaufruf sowie einen Laufzeit-Schreibaufruf enthalten.

Gemäß einer bevorzugten Ausführungsform des erfindungsgemäßen Verfahrens kann das Verfahren weitergehend dahin ausgestaltet werden, dass die Größe der Laufzeitumgebung ein Status-Parameter ist, der den Status eines über einen Laufzeit-Leseaufruf oder Laufzeit-Schreibaufruf übermittelten Datenelements beschreibt, wobei der Status die Validität oder die Vertrauenswürdigkeit oder eine Fehlerart des Datenelementes beschreibt. Durch einen direkten Zugriff auf den Parameter kann also ein gewünschter Status gesetzt werden und damit ein definierter Fehler injiziert und die Reaktion der Steuergeräte-Programmkomponente auf diesen Fehler getestet werden.

Nach einer weiteren bevorzugten Ausführungsform des erfindungsgemäßen Verfahrens kann das Verfahren weitergehend dahin ausgestaltet werden, dass die Größe der Laufzeitumgebung desweiteren ein Laufzeitumgebungs-Ereignis-Parameter ist. Dieser Parameter erlaubt das Auslösen eines Laufzeitumgebungs-Ereignisses wie es im AUTOSAR Standard definiert ist. So kann durch das Auslösen eines "DataReceivedErrorEvent" beispielweise eine Fehlermeldung an die sendende Programmkomponente ausgelöst werden. Wie der Beschreibung des AUTOSAR Standards zu entnehmen ist, werden die Ereignisse "DataWriteCompleteEvent" oder "Background/TimingEvent" in regelmäßigen Abständen ausgelöst. Durch den direkten Zugriff auf den Ereignisparameter kann jedes dieser Ereignisse gezielt ausgelöst werden.

Gemäß einer weiteren bevorzugten Ausführungsform des erfindungsgemäßen Verfahrens umfasst der Zugriff die Manipulation der Größe der Laufzeitumgebung, welche von einer Funktion oder von verschiedenen Funktionen derselben Programmkomponente oder von unterschiedlichen Programmkomponenten verwendet wird. Neben der Übermittelung eines Datenelementes von einer Programmkomponente zu einer anderen, können auch verschiedenen Funktionen ein und derselben Programmkomponente Datenelemente über die Laufzeitumgebung austauschen. Somit kann durch den erfindungsgemäßen Zugriff auf die Größe der Laufzeitumgebung auch auf die Kommunikation verschiedener Funktionen einer Programmkomponente Einfluss genommen werden.

Zur Veranschaulichung sei eine Steuergeräte-Programmkomponente zur Steuerung eines Blinkers beschrieben. Diese könnte aus 3 Funktionen, sogenannten Runnables, bestehen, die unterschiedliche Aufgaben durchführen. Eine Funktion liest mittels eines Kalibrierungsports den Kalibrierungsfaktor der Blinkgeschwindigkeit ein und stellt ihn in der InterRunnable-Variablen als Datenelement bereit. Die zweite Funktion empfängt über einen Receiver-Port den aktuellen Zustand eines Warnblinktasters. Diese Funktion wiederum stellt seinen Wert mittels einer weiteren InterRunnable-Variablen anderen Funktionen zur Verfügung. Die zwei Werte der Variablen werden von der dritten Funktion, die die eigentliche Blinkersteuerung definiert, gelesen und ausgewertet. Diese Funktion sendet über einen Sender-Port dann die Nachrichten an die zwei Aktuatoren, die die Blinkleuchten schalten.

Nach einer weiteren bevorzugten Ausführungsform des erfindungsgemäßen Verfahrens umfasst der Zugriff auf eine Größe der Laufzeitumgebung den simultanen Zugriff auf mehrere Größen der Laufzeitumgebung. Durch das Einbinden mehrerer Komponenten-Test-Dienste stehen nach der Generierung des ausführbaren Programmes die entsprechenden Eingriffsschnittstellen bzw. Eingriffspunkte der Laufzeitumgebung zur Verfügung, so dass durch entsprechende Auswahl in der Testszenario-Programmkomponente auch mehrere Größen der Laufzeitumgebung simultan gesetzt werden können.

Gemäß einer weiteren bevorzugten Ausführungsform des erfindungsgemäßen Verfahrens befinden sich die Steuergeräte-Programmkomponente und die Testszenario-Programmkomponente auf einer virtuellen elektronischen Steuereinheit oder die Steuergeräte-Programmkomponente befindet sich auf einer ersten virtuellen elektronischen Steuereinheiten und die Testszenario-Programmkomponente befindet sich auf einer zweiten virtuellen elektronischen Steuereinheiten.

Um das spätere Verhalten einer elektronischen Steuereinheit und das Zusammenwirken verschiedener elektronischer Steuereinheiten bereits in frühen Stadien der Entwicklung testen zu können, werden diese durch virtuelle elektronische Steuereinheiten abgebildet. Die Testszenario-Programmkomponente kann sich dabei auf derselben virtuellen Steuereinheit befinden wie die Steuergeräte-Programmkomponente, als auch auf einer weiteren am Verbundtest beteiligten virtuelle elektronische Steuereinheiten.

Nach einer weiteren bevorzugten Ausführungsform des erfindungsgemäßen Verfahrens bestimmt die Testszenario-Programmkomponente einen Zeitpunkt und/oder den Gültigkeitsbereich im Programmablauf, zu dem der vorgegebene Eingriff in den Kommunikationsprozess erfolgen soll.

Über eine entsprechende Anweisung in der Testszenario-Programmkomponente kann der genaue Zugriff, sowohl zeitlich als auch auf die einzelnen am Test beteiligten Programmkomponenten bezogen, bestimmt werden. So kann z.B. für eine Programmkomponente eine Größe der Laufzeitumgebung manipuliert werden, während dieselbe Größe für eine andere Programmkomponente davon unberührt bleibt. Ebenso ist es möglich, die Größe erst zu einem bestimmten Zeitpunkt zu manipulieren, so dass die Manipulation zu einer gewünschten Zeit im Programmablauf geschieht.

Gemäß einer weiteren bevorzugten Ausführungsform des erfindungsgemäßen Verfahrens umfasst das ausführbare Programm Ein- und Ausschalten des vorgegebenen Eingriffs in den Kommunikationsprozess durch die Testszenario-Programmkomponente.

Beim Erstellen des ausführbaren Programmes werden in dieser bevorzugten Ausführungsform sowohl diejenigen Programmfunktionen des ausführbaren Programmes erstellt, welche von Nöten sind, um das Programm mit einer manipulierten Größe für die Laufzeitumgebung ablaufen zu lassen, als auch mit der Originalgröße. Die Testszenario-Programmkomponente übergibt dabei ein Testsignal, welches sowohl die Größe der Laufzeitumgebung enthält, als auch eine Aktivierungsvariable, welche bestimmt, ob die Größe manipuliert werden soll oder nicht. In einer bevorzugten Ausführungsform weist der Komponenten-Test-Dienst gemäß seiner Konfiguration eine Schalterfunktion auf, mit der entsprechend dem Wert der Aktivierungsvariable die Manipulation einschaltet oder nicht.

Die Spezifikation bzw. Konfiguration der Schnittstellenbeschreibung, d.h. des Komponenten-Test-Dienstes, erfolgt in einer bevorzugten Ausführungsform von dem Benutzer über eine graphische Benutzeroberfläche z.B. durch Auswahl bestimmter vorgegebener Komponenten-Test-Dienste.

Die eingangs genannte Aufgabe wird zudem gelöst durch eine Entwicklungseinrichtung zum Bereitstellen eines Eingriffspunktes zur Manipulation einer Größe einer Laufzeitumgebung für das Testen einer zu testenden Steuergeräte-Programmkomponente in einer Testumgebung. Die Testumgebung umfasst eine Testszenario-Programmkomponente zur Bereitstellung von Eingangswerten und eine Beobachtervorrichtung zum Empfangen von Ausgangswerten und Anzeigen des Testergebnisses. Die Entwicklungseinrichtung weist eine elektronische Recheneinheit auf, welche ausgebildet ist, eine Laufzeitumgebung zu generieren, wobei die Laufzeitumgebung einen Kommunikationskanal zur Übertragung von Eingabe- und Ausgabewerten zwischen den Programmkomponenten bereitstellt; die elektronische Recheneinheit einen Komponenten-Test-Dienst bereitstellt, welcher eine Schnittstelle der Laufzeitumgebung gemäß dem AUTOSAR Standard als Eingriffspunkt zur Manipulation der Größe der Laufzeitumgebung anbietet, und mittels entsprechender Codegenerierung für die Laufzeitumgebung einen Zugriff der Testszenario-Programmkomponente auf die Größe der Laufzeitumgebung gestattet, wobei die Größe einen über den Kommunikationskanal ablaufenden Prozess bestimmt oder beschreibt oder beeinflusst. Die Beobachtervorrichtung zeigt vorzugsweise die Reaktion der Steuergeräte-Programmkomponente beim Ausführen des ausführbaren Programmes an, wobei ein von der Testszenario-Programmkomponente vorgegebener Fehler im Kommunikationsprozess oder eine vorgegebene Manipulation des Kommunikationsprozesses mittels der Größe der Laufzeitumgebung eingegeben oder vorgetäuscht wird und wobei die Reaktion der Steuergeräte-Programmkomponente auf den Fehler bzw. die Manipulation im Kommunikationsprozess zwischen den Programmkomponenten getestet wird.

Eine elektronische Recheneinheit kann im Rahmen der vorliegenden Erfindung verstanden werden als Komponente eines Computersystem, beispielsweise Personal Computer (PC) oder Workstation. Die elektronische Recheneinheit kann dabei beispielsweise ein Programm ausführen, so dass das Computersystem als Entwicklungseinrichtung zum Erstellen eines Steuergeräteprogramms und oder zur Durchführung des erfindungsgemäßen Verfahrens ausgebildet ist.

### BESCHREIBUNG DER ZEICHNUNGEN

- Figur 1:: Schematischer Aufbau einer virtuellen Testumgebung zum Testen einer Programmkomponente wie sie aus dem Stand der Technik bekannt ist.
- Figur 2:: Schematischer Aufbau einer virtuellen Testumgebung zum Testen einer Programmkomponente entsprechend dem erfindungsgemäßen Verfahren

### DETAILLIERTE BESCHREIBUNG

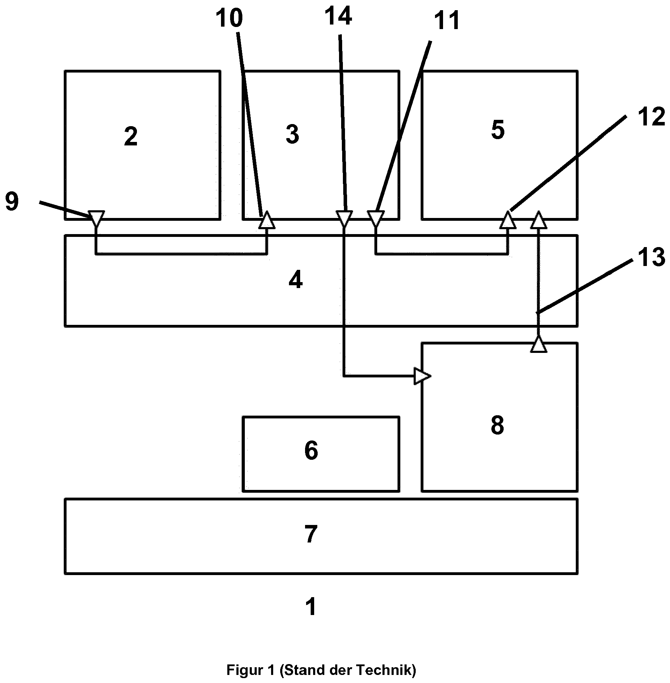

In Figure 1 ist schematisch der Aufbau einer virtuellen Testumgebung 1 dargestellt, wie sie gewöhnlich gemäß dem AUTOSAR Standard strukturiert ist. Dabei ist eine Unterteilung in drei Schichten zu erkennen. Die oberste Schicht bilden dabei die eingebundenen Programmkomponenten 2, 3 und 5, welche die Funktionalitäten eines Steuergeräteprogramms definieren. Eine Schicht mit Geräte-nahen Basisprogrammen 6 und 8 bildet das Fundament des Aufbaus. Die Verbindungsschicht 4 stellt die Laufzeitumgebung dar, über welche die Programmkomponenten miteinander und/oder mit den Basisprogrammen interagieren können. Mit Entwicklungseinrichtungen wie SystemDesk ist es möglich eine Programmkomponente, aber auch einen Verbund mehrerer Programmkomponenten zu modellieren und zu testen. Dabei wird durch die Anbindung an eine Simulationseinheit 7 (auch Simulator-Backplane genannt) die Funktionalität und das Zusammenwirken der eingebundenen Programmkomponenten simuliert, d.h. das Programm bestehend aus einer Programmkomponente oder einer Vielzahl von Programmkomponenten wird von der Simulationseinheit 7 ausgeführt. Dabei wird die Schnittstelle 10 einer zu testendenden Steuergeräte-Programmkomponente 3, mit der Schnittstelle 9 einer Testszenario-Programmkomponente 2 verbunden. Mit Hilfe der Testszenario-Programmkomponente 2 wird in der Simulation ein Testsignal für die zu testende Programmkomponente 3 erzeugt, welches dann als Ausgangssignal von der Testszenario-Programmkomponente 2 über die Laufzeitumgebung als Eingangssignal für die Steuergeräte-Programmkomponente 3 übermittelt wird. In Figur 1 ist die Schnittstelle 11 der Steuergeräte-Programmkomponente 3 mit der Schnittstelle 12 einer Beobachter-Programmkomponente 5 verbunden, so dass nach Durchlauf der Simulation an Hand des Ausgangssignals der Steuergeräte-Programmkomponente 3, welches über die Laufzeitumgebung an die Beobachter-Programmkomponente 5 vermittelt wird, geprüft werden kann, ob die Steuergeräte-Programmkomponente 3 wie gewünscht auf das anfänglich erhaltene Testsignal reagiert hat. Anstelle der Beobachter-Programmkomponente 5 können auch andere Beobachterkomponenten eingesetzt werden: So kann das Auslesen des Testergebnisses auch aus dem Speicher des Diagnose Ereignis Monitor (DEM) 8 oder mittels Diagnoseanzeige zur Laufzeit oder ähnliche Anzeigevorrichtungen erfolgen.

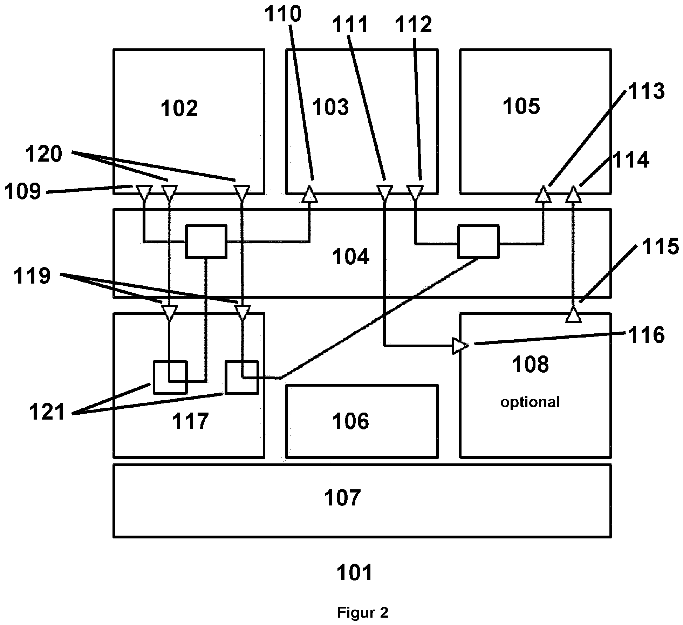

Die Kommunikation der Programmkomponenten untereinander erfolgt dabei über die Laufzeitumgebung 4. Als Verbindungsschicht stellt sie den Programmkomponenten eine vom Betriebssystem 6 unabhängige Plattform bereit, welche den Programmkomponenten Basisfunktionen bereitstellt, welche für die Kommunikation der Programmkomponenten untereinander benötigt werden - wie zum Beispiel Lese- und Schreibaufrufe. Die Erstellung der Laufzeitumgebung und des zu Grunde-liegenden Programmcodes erfolgt dabei automatisch basierend auf den Definitionen und Spezifikationen der eingebundenen Programmkomponenten. Die Laufzeitumgebung wird dementsprechend für jede neue Konstellation von eingebundenen Programmkomponenten neu erzeugt. Der Kommunikationskanal, welcher durch die Laufzeitumgebung abgebildet wird, entspricht dabei einer Signalübertragung über einen Bus in der zu realisierenden elektronischen Steuereinheit. Daher ist es von Nöten die Funktionsweise der Steuergeräte-Programmkomponente bei Störungen oder Ausfällen des Busses und damit des Kommunikationskanals zu testen. Figur 2 zeigt den schematischen Aufbau einer virtuellen Testumgebung 101, wie er dem erfindungsgemäßen Verfahren entspricht. Die Schicht der Geräte-nahen Basisprogramme enthält dabei eine weitere Komponente 117, welche Beschreibungen von Ports und Schnittstellen gemäß dem AUTOSAR Standard für die Laufzeitumgebung enthält. Diese Beschreibungen können als Komponenten-Test-Dienste in die virtuelle Testumgebung 101 integriert werden. Die Testszenario-Programkomponente 102 wird nun sowohl über die Schnittstelle 109 mit der Schnittstelle der zu testenden Steuergeräte-Programmkomponente 103 verbunden als auch über die Schnittstelle 120 mit einer Schnittstelle 119 der Laufzeitumgebung, welche über den Komponenten-Test-Dienst 121 einen Zugriff auf eine Größe der Laufzeitumgebung erlaubt. Auf diese Weise können über die Testszenario-Programmkomponente 102 Fehlerzustände bezüglich des Kommunikationskanals zwischen der Schnittstelle 109 und dem Eingang der zu testenden Steuergeräte-Programmkomponente 110 oder auch zwischen dem Ausgang der Steuergeräte-Programmkomponente 112 und dem Eingang einer weiteren Programmkomponente 113 eingespeist werden. Diese weitere Programmkomponente 113 kann dabei eine Beobachter-Programmkomponente sein. Die Laufzeitumgebung 104 wird nach wie vor nach Einbinden aller benötigten Programmkomponenten - inklusive der Komponente-Test-Dienste 121 - automatisch generiert.

## Patentansprüche

1. Verfahren zum Bereitstellen eines Eingriffspunktes zur Manipulation einer Größe einer Laufzeitumgebung (4, 104) für das Testen einer zu testenden Steuergeräte-Programmkomponente (3, 103) in einer Testumgebung (1, 101), deren Software, gemäß dem AUTOSAR-Standard, in drei Schichten aufgeteilt ist, nämlich in eine Schicht der Programmkomponenten (2, 3, 5, 102,103,105), eine Schicht der Laufzeitumgebung (4, 104) und eine Schicht der Geräte-nahen Basisprogramme (6, 8, 106, 108), wobei die Schicht der Programmkomponenten (2, 3, 5, 102, 103, 105) eine Testszenario-Programmkomponente (2, 102) zur Bereitstellung von Eingangswerten und eine Beobachtervorrichtung (5, 105) zum Empfangen von Ausgangswerten und Anzeigen des Testergebnisses aufweist, wobei das Verfahren umfasst:
Bereitstellen der zu testenden Steuergeräte-Programmkomponente (3, 103) mit Schnittstellen (10, 11, 110, 111, 112), die jeweils gemäß dem AUTOSAR-Standard definiert sind;
Erstellen eines ausführbaren Programmes der zu testenden Steuergeräte-Programmkomponente (3, 103) und der Testszenario-Programmkomponente (2, 102), wobei das Erstellen umfasst;
Generieren der Laufzeitumgebung (4, 104), wobei die Laufzeitumgebung (4, 104) einen Kommunikationskanal zur Übertragung der Eingabe- und Ausgabewerte bereitstellt,
**dadurch gekennzeichnet, dass**
ein Komponenten-Test-Dienst (121) als Teil einer weiteren Komponente (117) in der Schicht der Geräte-nahen Basisprogramme (6, 8, 106, 108) bereitgestellt wird, der eine Beschreibung für einen Port und eine Schnittstelle (119) der Laufzeitumgebung (4, 104), gemäß dem AUTOSAR Standard, enthält und den Port und die Schnittstelle (119) der Laufzeitumgebung (4, 104) als Eingriffspunkt zur Manipulation der Größe der Laufzeitumgebung (4, 104) anbietet, und mittels entsprechender Codegenerierung für die Laufzeitumgebung (4, 104) inklusive des beschriebenen Ports und der beschriebenen Schnittstelle (119) einen Zugriff der Testszenario-Programmkomponente (2, 102) auf die Größe der Laufzeitumgebung (4, 104)
gestattet, wobei die Größe einen über den Kommunikationskanal ablaufenden Prozess bestimmt oder beschreibt oder beeinflusst.

2. Verfahren nach Anspruch 1, wobei das Testen ferner umfasst:
Ausführen des ausführbaren Programmes, wobei ein von der Testszenario-Programmkomponente (2, 102) vorgegebener Eingriff in den Kommunikationsprozess mittels einer Manipulation der Größe der Laufzeitumgebung (4, 104) über den Eingriffspunkt erfolgt und wobei die Reaktion der Steuergeräte-Programmkomponente (3, 103) auf die Manipulation des Kommunikationsprozess zwischen den Programmkomponenten getestet wird, indem die Reaktion der Steuergeräte-Programmkomponente (3, 103) von der Beobachtervorrichtung (5, 105) erfasst wird.

3. Verfahren nach Anspruch 1 oder 2, wobei die Beobachtervorrichtung (5, 105) eine Beobachter-Programmkomponente ist, deren Schnittstellen (113, 114) jeweils gemäß dem AUTOSAR-Standard definiert sind.

4. Verfahren nach einem der Ansprüche 1-3, wobei die Größe der Laufzeitumgebung (104) durch einen Parameter, eine Variable oder eine Funktion der Laufzeitumgebung (4, 104) gegeben ist.

5. Verfahren nach einem der Ansprüche 1-3, wobei die Größe der Laufzeitumgebung (4, 104) ein Status- Parameter ist, der den Status eines Eingabe- oder eines Ausgabewertes beschreibt, wobei der Status die Validität oder die Vertrauenswürdigkeit oder eine Fehlerart des Eingabe- oder Ausgabewertes beschreibt.

6. Verfahren nach einem der Ansprüche 1-3, wobei die Größe der Laufzeitumgebung (4, 104) ein Laufzeitumgebungs-Ereignis-Parameter ist, der das Auslösen eines Laufzeitumgebungs-Ereignisses ermöglicht.

7. Verfahren nach einem der Ansprüche 1-6, wobei der Zugriff auf eine Größe der Laufzeitumgebung (4, 104) umfasst:
Manipulation der Größe der Laufzeitumgebung, welche von einer Funktion oder mehreren Funktionen derselben Programmkomponente oder von unterschiedlichen Programmkomponenten verwendet wird.

8. Verfahren nach einem der Ansprüche 1-7, wobei Zugriff auf eine Größe der Laufzeitumgebung (4, 104) umfasst, simultaner Zugriff auf mehrere Größen der Laufzeitumgebung (4, 104).

9. Verfahren nach einem der Ansprüche 1-8, wobei sich die Steuergeräte-Programmkomponente (3, 103) und die Testszenario-Programmkomponente (2, 102) auf einer virtuellen elektronischen Steuereinheit oder wobei sich die Steuergeräte-Programmkomponente (3, 103) auf einer ersten virtuellen elektronischen Steuereinheiten befindet und die Testszenario-Programmkomponente (2, 102) sich auf einer zweiten virtuellen elektronischen Steuereinheiten befindet.

10. Verfahren nach einem der Ansprüche 1-9, wobei die Testszenario-Programmkomponente (2, 102) ferner einen Zeitpunkt und/oder den Gültigkeitsbereich im Programmablauf bestimmt, zu dem der vorgegebene Eingriff in den Kommunikationsprozess erfolgen soll.

11. Verfahren nach einem der Ansprüche 1-10, wobei das ausführbare Programm umfasst:
Ein- und Ausschalten des vorgegebenen Eingriffs in den Kommunikationsprozess durch die Testszenario-Programmkomponente (2, 102).

12. Entwicklungseinrichtung zum Bereitstellen eines Eingriffspunktes zur Manipulation einer Größe einer Laufzeitumgebung (4, 104) für das Testen einer zu testenden Steuergeräte-Programmkomponente (3, 103) in einer Testumgebung (1, 101), deren Software, gemäß dem AUTOSAR-Standard, in drei Schichten aufgeteilt ist, nämlich in eine Schicht der Programmkomponenten (2, 3, 5, 102, 103, 105), eine Schicht der Laufzeitumgebung (4, 104) und eine Schicht der Geräte-nahen Basisprogramme (6, 8, 106, 108), wobei die Schicht der Programmkomponenten (2, 3, 5, 102, 103, 105) eine Testszenario-Programmkomponente (2, 102) zur Bereitstellung von Eingangswerten und eine Beobachtervorrichtung (5, 105) zum Empfangen von Ausgangswerten und Anzeigen des Testergebnisses aufweist, umfassend:
eine elektronische Recheneinheit, welche ausgebildet ist, aus der zu testenden Steuergeräte-Programmkomponente, deren Schnittstellen, gemäß dem AUTOSAR-Standard, definiert sind, und der Testszenario-Programmkomponente (2, 102), ein ausführbares Programm zu generieren,
wobei die elektronische Recheneinheit ferner ausgebildet ist, eine Laufzeitumgebung (4, 104) zu generieren, wobei die Laufzeitumgebung (4, 104) einen Kommunikationskanal zur Übertragung von Eingabe- und Ausgabewerten bereitstellt, **dadurch gekennzeichnet, dass**
die elektronische Recheneinheit ausgebildet ist, einen Komponenten-Test-Dienst (121) als Teil einer weiteren Komponente (117) in der Schicht der Geräte-nahen Basisprogramme (6, 8, 106, 108) bereitzustellen, der eine Beschreibung für einen Port und eine Schnittstelle der Laufzeitumgebung (4, 104), gemäß dem AUTOSAR Standard, enthält, und welcher den Port und die Schnittstelle der Laufzeitumgebung (4, 104) als Eingriffspunkt zur Manipulation der Größe der Laufzeitumgebung (4, 104) anbietet, und mittels entsprechender Codegenerierung für die Laufzeitumgebung (4, 104) inklusive des beschriebenen Ports und der beschriebenen Schnittstelle (119) einen Zugriff der Testszenario-Programmkomponente (2, 102) auf die Größe der Laufzeitumgebung (4, 104) gestattet, wobei die Größe einen über den Kommunikationskanal ablaufenden Prozess bestimmt oder beschreibt oder beeinflusst.

## Claims

1. A method for producing an access point for manipulating a parameter of a runtime environment (4, 104) for testing a control device program component (3, 103) to be tested in a test environment (1, 101), the software thereof being divided into three layers according to the AUTOSAR standard, namely into a layer of program components (2, 3, 5, 102,103,105), a layer of the runtime environment (4, 104), and a layer of the near-device basic software (6, 8, 106, 108), the layer of program components (2, 3, 5, 102, 103, 105) comprising a test scenario program component (2, 102) for producing input values and an observer device (5, 105) for receiving output values and displaying the test results, the method comprising:
providing the control device program component (3, 103) to be tested having interfaces (10, 11, 110, 111, 112) each defined according to the AUTOSAR standard;
creating an executable program of the control device program component (3, 103) to be tested and the test scenario program component (2, 102), the creating comprising:
generating the runtime environment (4, 104), the runtime environment (4, 104) providing a communications channel for transmitting the input and output values,
**characterized in that**
a component test service (121) is provided as part of a further component (117) in the layer of near-device basic software (6, 8, 106, 108), comprising a description for a port and an interface (119) of the runtime environment (4, 104) according to the AUTOSAR standard, and providing the port and the interface (119) of the runtime environment (4, 104) as an access point for manipulating the parameter of the runtime environment (4, 104), and allowing access by the test scenario program component (2, 102) to the parameter of the runtime environment (4, 104) by means of generating corresponding code for the runtime environment (4, 104), including the described port and the described interface (119), wherein the parameter determines or describes or influences a process running via the communications channel.

2. The method according to Claim 1, the testing further comprising:
executing the executable program, wherein an access specified by the test scenario program component (2, 102) to the communications process by means of manipulating the parameter of the runtime environment (4, 104) occurs via the access point, and wherein the reaction of the control device program component (3, 103) to the manipulation of the communication process between the program components is tested in that the reaction of the control device program component (3, 103) is captured by the observer device (5, 105).

3. The method according to Claim 1 or 2, wherein the observer device (5, 105) is an observer program component, the interfaces (113, 114) thereof each being defined according to the AUTOSAR standard.

4. The method according to any one of the claims 1-3, wherein the parameter of the runtime environment (104) is defined by a parameter, a variable, or a function of the runtime environment (4, 104).

5. The method according to any one of the claims 1-3, wherein the parameter of the runtime environment (4, 104) is a status parameter describing the status of an input or an output value, wherein the status describes the validity or the trustworthiness or an error type of the input or output value.

6. The method according to any one of the claims 1-3, wherein the parameter of the runtime environment (4, 104) is a runtime environment event parameter allowing a runtime environment event to be triggered.

7. The method according to any one of the claims 1-6, wherein the access to a parameter of the runtime environment (4, 104) comprises:
manipulating the parameter of the runtime environment used by a function or a plurality of functions of the same program component or by different program components.

8. The method according to any one of the claims 1-7, wherein access to a parameter of the runtime environment (4, 104) comprises simultaneous access to a plurality of parameters of the runtime environment (4, 104).

9. The method according to any one of the claims 1-8, wherein the control device program component (3, 103) and the test scenario program component (2, 102) are present on a virtual electronic control unit, or wherein the control device program component (3, 103) is present on a first virtual electronic control unit and the test scenario program component (2, 102) is present on a second virtual electronic control unit.

10. The method according to any one of the claims 1-9, wherein the test scenario program component (2, 102) further determines a point in time and/or validity range in the program sequence at which the specified access to the communications process should occur.

11. The method according to any one of the claims 1-10, wherein the executable program comprises:
switching on and off the specified access to the communications process by the test scenario program component (2, 102) .

12. A development device for producing an access point for manipulating a parameter of a runtime environment (4, 104) for testing a control device program component (3, 103) to be tested in a test environment (1, 101), the software thereof being divided into three layers according to the AUTOSAR standard, namely into a layer of program components (2, 3, 5, 102,103,105), a layer of the runtime environment (4, 104), and a layer of the near-device basic software (6, 8, 106, 108), the layer of program components (2, 3, 5, 102, 103, 105) comprising a test scenario program component (2, 102) for producing input values and an observer device (5, 105) for receiving output values and displaying the test results, comprising:
an electronic computing unit implemented for generating an executable program from the control device program component to be tested, the interfaces thereof being defined according to the AUTOSAR standard, and from the test scenario program component (2, 102),
the electronic computing unit being further implemented for generating a runtime environment (4, 104), the runtime environment (4, 104) providing a communications channel for transmitting input and output values, **characterized in that** the electronic computing unit is implemented for providing a component test service (121) as part of a further component (117) in the layer of near-device basic software (6, 8, 106, 108), comprising a description for a port and an interface (119) of the runtime environment (4, 104) according to the AUTOSAR standard, and providing the port and the interface (119) of the runtime environment (4, 104) as an access point for manipulating the parameter of the runtime environment (4, 104), and allowing access by the test scenario program component (2, 102) to the parameter of the runtime environment (4, 104) by means of generating corresponding code for the runtime environment (4, 104), including the described port and the described interface (119), wherein the parameter determines or describes or influences a process running via the communications channel.

## Revendications

1. Procédé de fourniture d'un point d'intervention pour la manipulation d'une grandeur d'un environnement d'exécution (4, 104) pour l'essai d'un composant de programme de contrôleur (3, 103) à soumettre à essai dans un environnement d'essai (1, 101), dont le logiciel est partagé en trois couches conformément à la norme AUTOSAR, à savoir une couche des composants de programme (2, 3, 5, 102, 103, 105), une couche de l'environnement d'exécution (4, 104) et une couche des programmes de base proches de l'appareil (6, 8, 106, 108), la couche des composants de programme (2, 3, 5, 102, 103, 105) possédant un composant de programme de scénario d'essai (2, 102) destiné à fournir des valeurs d'entrée et un arrangement observateur (5, 105) destiné à recevoir des valeurs de sortie et à afficher le résultat de l'essai, le procédé comprenant :
fourniture du composant de programme de contrôleur (3, 103) à soumettre à essai avec des interfaces (10, 11, 110, 111, 112) qui sont respectivement définies selon la norme AUTOSAR ;
création d'un programme exécutable du composant de programme de contrôleur (3, 103) à soumettre à essai et du composant de programme de scénario d'essai (2, 102), la création comprenant :
génération de l'environnement d'exécution (4, 104), l'environnement d'exécution (4, 104) fournissant un canal de communication destiné à la transmission des valeurs d'entrée et de sortie,
**caractérisé en ce que**
un service d'essai de composant (121) est fourni en tant que partie d'un composant supplémentaire (117) dans la couche des programmes de base proches de l'appareil (6, 8, 106, 108), lequel contient une description pour un port et une interface (119) de l'environnement d'exécution (4, 104) conformément à la norme AUTOSAR, et propose le port ainsi que l'interface (119) de l'environnement d'exécution (4, 104) comme point d'intervention pour la manipulation de la grandeur de l'environnement d'exécution (4, 104) et, au moyen de la génération d'un code correspondant pour l'environnement d'exécution (4, 104), y compris le port décrit et l'interface (119) décrite, autorise un accès par le composant de programme de scénario d'essai (2, 102) à la grandeur de l'environnement d'exécution (4, 104), la grandeur déterminant ou décrivant ou influençant un processus qui se déroule par le biais du canal de communication.

2. Procédé selon la revendication 1, l'essai comprenant en outre :
exécution du programme exécutable, une intervention dans le processus de communication prédéfinie par le composant de programme de scénario d'essai (2, 102) s'effectuant au moyen d'une manipulation de la grandeur dans l'environnement d'exécution (4, 104) par le biais du point d'intervention et la réaction du composant de programme de contrôleur (3, 103) à la manipulation du processus de communication entre les composants de programme étant soumise à essai par une détection par l'arrangement observateur (5, 105) de la réaction du composant de programme de contrôleur (3, 103) .

3. Procédé selon la revendication 1 ou 2, l'arrangement observateur (5, 105) étant un composant de programme observateur dont les interfaces (113, 114) sont respectivement définies selon la norme AUTOSAR.

4. Procédé selon l'une des revendications 1 à 3, la grandeur de l'environnement d'exécution (104) étant donnée par un paramètre, une variable ou une fonction de l'environnement d'exécution (4, 104) .

5. Procédé selon l'une des revendications 1 à 3, la grandeur de l'environnement d'exécution (4, 104) étant un paramètre d'état qui décrit l'état d'une valeur d'entrée ou de sortie, l'état décrivant la validité ou la fiabilité ou un type d'erreur de la valeur d'entrée ou de sortie.

6. Procédé selon l'une des revendications 1 à 3, la grandeur de l'environnement d'exécution (4, 104) étant un paramètre d'événement d'environnement d'exécution qui permet le déclenchement d'un événement d'environnement d'exécution.

7. Procédé selon l'une des revendications 1 à 6, l'accès à une grandeur de l'environnement d'exécution (4, 104) comprenant :
manipulation de la grandeur de l'environnement d'exécution, laquelle est utilisée par une fonction ou plusieurs fonctions du même composant de programme ou de composants de programme différents.

8. Procédé selon l'une des revendications 1 à 7, l'accès à une grandeur de l'environnement d'exécution (4, 104) comprenant l'accès simultané à plusieurs grandeurs de l'environnement d'exécution (4, 104).

9. Procédé selon l'une des revendications 1 à 8, le composant de programme de contrôleur (3, 103) et le composant de programme de scénario d'essai (2, 102) se trouvant sur une unité de commande électronique virtuelle ou alors le composant de programme de contrôleur (3, 103) se trouvant sur une première unité de commande électronique virtuelle et le composant de programme de scénario d'essai (2, 102) se trouvant sur une deuxième unité de commande électronique virtuelle.

10. Procédé selon l'une des revendications 1 à 9, le composant de programme de scénario d'essai (2, 102) déterminant en outre un instant et/ou un domaine de validité dans le déroulement du programme auquel doit avoir lieu l'intervention prédéfinie dans le processus de communication.

11. Procédé selon l'une des revendications 1 à 10, le programme exécutable comprenant :
activation et désactivation de l'intervention prédéfinie dans le processus de communication par le composant de programme de scénario d'essai (2, 102).

12. Dispositif de développement destinée à fournir un point d'intervention pour la manipulation d'une grandeur d'un environnement d'exécution (4, 104) pour l'essai d'un composant de programme de contrôleur (3, 103) à soumettre à essai dans un environnement d'essai (1, 101), dont le logiciel est partagé en trois couches conformément à la norme AUTOSAR, à savoir une couche des composants de programme (2, 3, 5, 102, 103, 105), une couche de l'environnement d'exécution (4, 104) et une couche des programmes de base proches de l' appareil (6, 8, 106, 108), la couche des composants de programme (2, 3, 5, 102, 103, 105) possédant un composant de programme de scénario d'essai (2, 102) destiné à fournir des valeurs d'entrée et un arrangement observateur (5, 105) destiné à recevoir des valeurs de sortie et à afficher le résultat de l'essai, comprenant :
une unité de calcul électronique qui est configurée pour générer un programme exécutable à partir du composant de programme de contrôleur à soumettre à essai, dont les interfaces sont définies conformément à la norme AUTOSAR, et du composant de programme de scénario d'essai (2, 102),
l'unité de calcul électronique étant en outre configurée pour générer un environnement d'exécution (4, 104), l'environnement d'exécution (4, 104) fournissant un canal de communication destiné à la transmission de valeurs d'entrée et de sortie, **caractérisé en ce que**
l'unité de calcul électronique est configurée pour fournir un service d'essai de composant (121) en tant que partie d'un composant supplémentaire (117) dans la couche des programmes de base proches de l'appareil (6, 8, 106, 108), lequel contient une description pour un port et une interface de l'environnement d'exécution (4, 104) conformément à la norme AUTOSAR, et propose le port ainsi que l'interface de l'environnement d'exécution (4, 104) comme point d'intervention pour la manipulation de la grandeur de l'environnement d'exécution (4, 104) et, au moyen de la génération d'un code correspondant pour l'environnement d'exécution (4, 104), y compris le port décrit et l'interface (119) décrite, autorise un accès par le composant de programme de scénario d'essai (2, 102) à la grandeur de l'environnement d'exécution (4, 104), la grandeur déterminant ou décrivant ou influençant un processus qui se déroule par le biais du canal de communication.
